(19) **Europäisches Patentamt / European Patent Office / Office européen des brevets**

(11) **EP 2 765 844 B1**

(12) **EUROPEAN PATENT SPECIFICATION**

(45) Date of publication and mention
of the grant of the patent:
**15.02.2017 Bulletin 2017/07**

(21) Application number: **12768846.3**

(22) Date of filing: **05.10.2012**

(51) Int Cl.:
*A01B 63/111* (2006.01)     *A01B 63/112* (2006.01)
*A01B 63/114* (2006.01)

(86) International application number:
**PCT/EP2012/069708**

(87) International publication number:
**WO 2013/053645 (18.04.2013 Gazette 2013/16)**

(54) **VEHICLE CONTROL SYSTEM**

FAHRZEUGSTEUEREINRICHTUNG

SYSTÈME DE COMMANDE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2011 GB 201117724**

(43) Date of publication of application:
**20.08.2014 Bulletin 2014/34**

(73) Proprietor: **AGCO International GmbH**
**8212 Neuhausen am Rheinfall (CH)**

(72) Inventor: **KNOBLOCH, Juergen**
**87674 Ruderatshofen (DE)**

(74) Representative: **AGCO Intellectual Property Department**
**Abbey Park Stoneleigh**
**Kenilworth, Warwickshire CV8 2TQ (GB)**

(56) References cited:
**WO-A1-82/01354**      **US-A- 3 269 464**
**US-A- 4 023 622**      **US-A- 5 884 204**
**US-A1- 2008 066 934**      **US-A1- 2011 202 232**

**Description**

The invention relates to a control system of a vehicle, especially a tractor, equipped with a Continuously Variable Transmission (CVT) of the hydrostatic-mechanical split type which includes a hydraulic drive circuit in which a hydraulic pump supplies pressurised fluid to a hydraulic motor.

Hitches, especially so-called three-point hitches, are one known arrangement used to attach implements to a drawing vehicle, e.g. an agricultural tractor. The implement may be fully-mounted or semi-mounted whereby a semi-mounted implement has a wheel engaging with the ground during soil operation while a fully-mounted implement puts all its load on the three-point hitch.

These three-point hitches most frequently consist of two lower lifting arms to which an implement is attached. The lower lifting arms can be pivoted by respective hydraulic actuating cylinders to adjust height position of the implement relative to the tractor. Furthermore, these lower lifting arms may be adjusted manually in distance to be adapted to the implement. An additional top link connects the implement to the tractor on a level above the lower lifting arms. This top link is used to pivot the implement about a horizontal transverse axis and is adjustable by means of a threaded connection or a hydraulic cylinder.

Alternative designs of three-point hitch are known, such as the arrangements shown in US6 321 851, US 2003/217852 (Fig. 4-6) and US 5 997 024 in which the lower links are replaced by two or four variable length hydraulic rams. This variable length ram arrangement enables multi axis movement of any implement attached to the hitch.

US4023622 discloses a draft control system for a hydrostatic drive tractor. To control the three-point hitch, modern tractors are mainly equipped with electronic hitch control systems to improve work quality and driver comfort during operation.

Such electronic hitch control systems operate on three well known bases:

- Position control: In general, the tractor speed is kept constant by a speed control system and the position of the lower lifting arms is sensed directly or indirectly so that the working depth of the implement in the soil can be adjusted within limits set by the operator whilst the speed of the tractor is maintained constant.

- Draft control: The implement is raised and lowered in the soil depending on the draft force applied by the implement to reduce fuel consumption, avoid engine stall or damage of the implement or tractor. Again, vehicle speed is kept constant. If the implement is lowered into the ground an initial draft is applied defining the zero level. The operator can then set a value representing a force increase which means that the operator can decide how fast the implement is lifted when a small force increase or a big force increase occurs. The value entered by the operator thereby does not represent an exact value for the force applied, e.g. 5 kN, but defines the responsiveness of the draft control. The objective of this function is to move the implement only within a small range while avoiding excessive draft or pull force variations. Therefore, a draft force sensor, typically in the form of a draft force sensing pin which connects the lower lifting arms to the tractor chassis, is used to measure the horizontal load applied to the tractor by the implement.

- Intermix of position/draft control: This control arrangement, as its name implies, is a mixture of position and draft control in which a draft control system can only lift the implement within a limited range of positions. This function is provided to avoid excessive movement of the implement in the soil resulting in poor working quality. Again, vehicle speed is kept constant by a speed control system.

It is also known to provide vibration damping when a fully-mounted implement is lifted e.g. during transport on the road, when the full weight rests on the rear of the tractor. In this transport position, if the tractor goes at high speed over uneven ground, the weight of the raised implement may result in the weight applied to the front axle varying temporarily resulting in the oscillation of the tractor and poor steerability. A damping system is therefore provided to avoid this variation of the weight applied to the front axle which uses signals from the before mentioned position sensor in combination with the draft sensor. Generally, the draft sensor is only capable of measuring forces in the horizontal direction. But as the force applied by the implement acts in a line inclined to the vertical and horizontal direction, the horizontal component of the force applied by the implement can be measured. This component of the draft force signal in combination with a position signal indicative that the implement is in the transport position is used to adjust damping characteristics of the hydraulic actuating cylinders which move the lifting arms so that the oscillation of the tractor is avoided.

As described above, most of the tractors use sensing pins which attach the lower lifting arms to the tractor chassis This type of sensing pin requires proper installation, e.g. horizontal alignment for draft force sensing. In addition such sensing pins use resistance strain gauges and are very sensitive to dirt and heat and such sensors are quite expensive and reliability is difficult to ensure.

In addition, when a tractor has a three-point hitch at the rear and at the front of the tractor each hitch must be provided with its own draft force sensors.

Some implements are simply towed, rather than being hitch mounted, with actuators on the implement controlling required operating conditions of the implement based on information received from the tractor, for example via a CAN-BUS link. Where the operating condition requires a particular draft force (for example depth control) the towing hitch also requires a draft force sensor.

It is an object of the present invention to provide a hitch control system which avoids the use of the above draft force sensing pins.

Furthermore, for advanced linkage systems such as the variable length ram arrangements described above in relation to US6 321 851, US 2003/217852 (Fig. 4-6) and US 5 997 024, it may be difficult to install a draft force sensing pin due to the complex three-dimensional geometry.

Thus according to the present invention there is provided a control system for a tractor which includes a transmission with a hydraulic drive circuit in which a hydraulic pump supplies pressurised fluid to a hydraulic motor, the control system controlling an operating condition of an implement and including a pressure sensing means to sense the pressure in the hydraulic drive circuit which is indicative of the current pull force necessary to pull the implement, the system also including a control means which receives the pressure signal and inputs from the tractor operator indicative of the required operating condition of the implement and adjusts an implement position in response to the variations in the pressure signal in order to try to maintain the required operating condition of the implement.

The control system controls the position of an implement attachment hitch relative to the tractor via actuator means which raises and lowers the implement hitch relative to the tractor. Such a hitch control system can be used to control a hitch which is attached to the rear and/or front of the tractor. No additional draft force sensors are involved as the variation of the pull force of the hitch or hitches is determined from the variation in the hydraulic drive circuit pressure. Also the need to use existing pin sensors is avoided.

The inputs into the control means by the operator may be indicative of draft force control criteria.

The system is also provided with hitch position sensing means which supplies the control means with a signal indicative of the current position of the hitch relative to the tractor.

In such a system the inputs into the control means by the operator may be indicative of intermix control criteria.

According to the invention, the hitch actuator means may comprise a fluid pressure actuator means which pivots the hitch relative to the tractor and a second pressure sensing means is provided which supplies the control means with a signal indicating the variation in pressure in the fluid pressure actuator means which is indicative of the oscillation of the tractor and implement, the control means varying the pressure in the actuator means to allow the implement to move relative to the tractor when the tractor is driven with the implement in a transport position over rough ground to damp the tendency of the tractor and implement to oscillate together.

According to the invention, the hitch actuator means may comprise fluid pressure actuator means which pivots the hitch relative to the tractor and wheel load sensing means are provided which supply the control means with signal indicating the variation in wheel loading which is indicative of the oscillation of the tractor and implement, the control means varying the pressure in the actuator means to allow the implement to move relative to the tractor when the tractor is driven with the implement in a transport position over rough ground to damp the tendency of the tractor and implement to oscillate together.

The present invention will now be described, by way of example only, with reference to the accompanying drawings in which:-

Figure 1 diagrammatically shows a side view of a tractor with a hitch control system embodying the present invention;

Figure 2 diagrammatically shows a driveline of a tractor with a hydrostatic mechanical CVT and having a hitch control system embodying the present invention;

Figure 3 diagrammatically shows in more detail the hydrostatic mechanical CVT portion of the driveline of Figure 2, and

Figure 4 shows a diagram of the forces between a tractor wheel and the ground.

Referring to the drawings, a tractor 1 has a driveline 2 having a combustion engine 3, a flywheel 4, a continuously variable transmission (CVT) T of the hydrostatic-mechanical split type and a rear axle housing 300. Combustion engine 3 is connected to CVT T by chassis part 310.

A three-point hitch 400 is attached to the rear axle housing 300 and mainly consists of two lower lifting arms 401 to which an implement is attached. A plough 500 with ground engaging means 501 is attached to lower lifting arms 401. An additional top link 402 connects the implement 500 to the tractor 1. The top link 402 is of a hydraulic type adjustable in length by hydraulic fluid to adjust inclination of the plough 500 to the ground. The lower lifting arms 401 can be pivoted about axis A by respective hydraulic actuating cylinders 403 moving rocker arm 404 and lift rod 405. The hydraulic actuating cylinders 403 are supplied with actuating fluid by a control valve 406 to control which chamber 403a (to lift the implement) or chamber 403b (to lower the implement) of the hydraulic actuating cylinders 403 is charged with fluid. Control valve 406 is connected to a pump 407 driven by combustion engine 3 and connected with a fluid tank 408.

The position of the lower lift arms 401 is indirectly measured by a position sensor 409 sensing the position of a cam 410 attached to rocker arm 404.

An additional pressure sensor 411 is provided to measure fluid pressure in the chamber 403a of the hydraulic actuating cylinders 403. The fluid in the chamber 403a is compressed when the implement weight is fully taken by the three-point hitch 400 and thereby a pressure increase indicates movement of the implement to the transport position.

A tractor control unit 13 is provided to control various functions of the vehicle. The control unit 13 is electronically connected to various components via CAN-BUS, e.g. transmission, display and input devices. The control unit 13 also contains software to drive the electronic hitch control system. The control unit 13 is connected to an input and display device 13a in the tractor cab to receive input from the operator and show information to the operator.

Position sensor 409, control valve 406 and pressure sensor 411 are connected to the control unit 13.

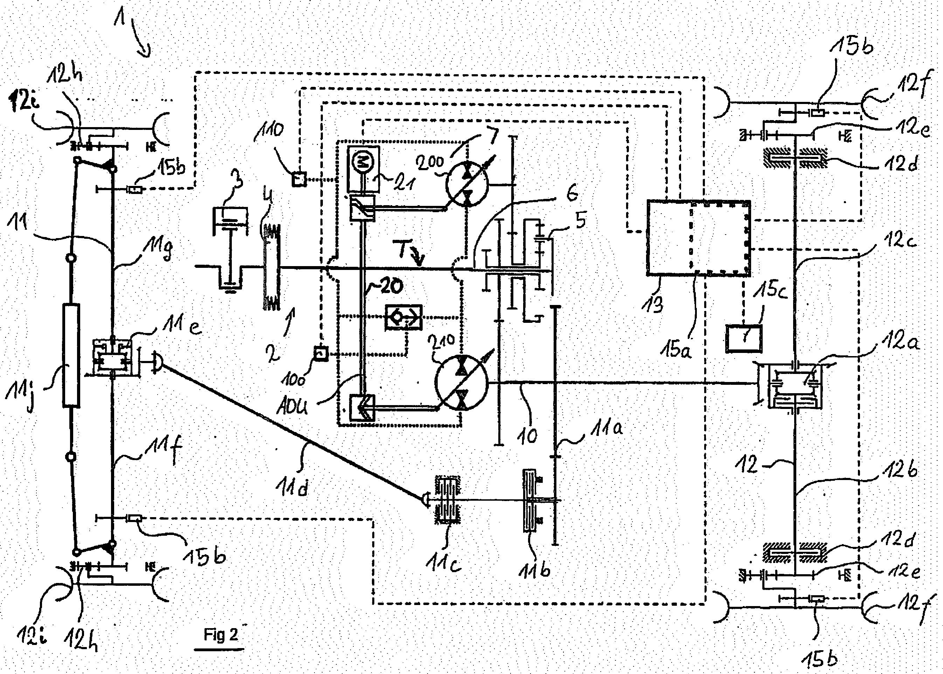

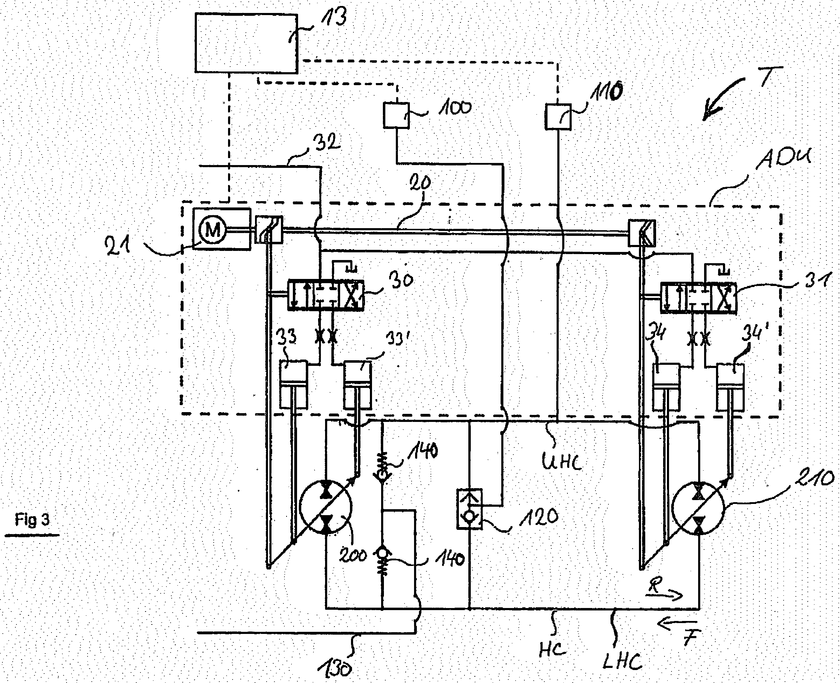

Figure 2 shows the driveline 2 of the tractor 1 in more detail. The torque supplied by combustion engine 3 via a flywheel 4 is distributed to a mechanical branch 6 and a hydrostatic branch 7 of the transmission T via planetary drive 5. The hydrostatic branch 7 mainly consists of hydrostats 200, 210, wherein hereafter the hydrostat 200 is designated as the hydraulic pump 200 and the hydrostat 210 as the hydraulic motor 210. Both hydraulic pump 200 and hydraulic motor 210 can be pivoted by an adjustment unit ADU to change delivery/intake volume as described in Figure 3. Both mechanical branch 6 and hydrostatic branch 7 of the transmission are drivingly brought together on a CVT output shaft 10 at the end of CVT T. The CVT output shaft 10 delivers an output torque to the respective driveline front and rear axles 11 and 12.

CVT output shaft 10 drives a rear axle differential 12a splitting the torque to a left rear axle portion 12b and a right rear axle portion 12c. Both rear axle portions 12b, 12c are provided with brakes 12d, final reduction gears 12e and wheels 12f.

CVT output shaft 10 also drives a front axle drive gear pair 11a followed by a front wheel drive clutch 11b to disengage and engage front axle driveline. In addition a front brake 11c is provided connected to a cardan shaft 11d which ends in a front axle differential 11e splitting the torque to a left front axle portion 11f and a right front axle portion 11g. Both front axles portions 11f, 11g are provided with final reduction gears 12h and wheels 12i. Wheels 12i are steerable about substantially vertical axis using a hydraulic steering cylinder 11j mounted on the front axle.

The driveline 2 is also equipped with an anti-skid system 15 which mainly consists of an anti-skid control unit 15a integrated in the tractor control unit 13 of the tractor 1, speed sensors 15b for each wheel 11i, 12f and an further anti-skid sensor 15c. The anti-skid sensor 15c provides relevant parameters to control brake function, e.g. acceleration in various axes or inclinations of the vehicle. Anti-skid control unit 15a may be separate from tractor control unit 13.

Alternatively, a GPS system may also deliver parameters like the acceleration or the inclination of the vehicle.

Figure 3 shows a diagrammatic sketch of the hydrostatic mechanical split type transmission T having an adjustment unit ADU defined by the broken line. The components outside the broken line belong to the power unit of the transmission.

The hydrostats 200, 210 illustrated in Figure 2 and 3 are an axial piston pump and an axial piston motor of oblique-axle design, of which the delivery/intake volume is changed by the pivoting of the axis of rotation of the pistons to an axle drive shaft, not shown.

By means of a first valve unit 30 allocated to hydraulic pump 200, and by means of a second valve unit 31 allocated to the hydraulic motor 210, the individual pivot angle of the hydraulic pump 200 and/or of the hydraulic motor 210 can be adjusted.

Depending on the specified revolution speed transmission ratio iT set by the driver via control unit 13 an actuator element 20 is rotated by means of an actuator motor 21. The actuator motor 21 is in this case controlled by the control unit 13. Because the valve units 30, 31 are coupled to the actuator element 20, these valve units 30, 31 are displaced corresponding to the actuator element 20. As a result, oil present in a line 32 can flow into a cylinder 33, 33', 34, 34' allocated to the valve unit 30, 31.

Due to the displacement of the actuator element 20, the oil flow is accordingly directed out of the line 32 into the cylinders 33, 33', 34,34' and so pivot angle of the hydraulic pump 200 and of the hydraulic motor 210 is adjusted. The pivot angle, and therefore the delivery volume of the hydraulic pump 200 and the intake volume of the hydraulic motor 210 can accordingly be changed. This makes it possible for the revolution speed of the axle drive shaft, not shown in Figure 2 and 3, to be adjusted, and with it the revolution speed transmission ratio of the transmission T.

The hydraulic pump 200 is connected by fluid circuit HC to the hydraulic motor 210. The fluid circuit HC in has an upper circuit UHC and a lower circuit LHC. The direction of the arrow F represents a flow direction of the fluid located inside the hydraulic circuit HC during forwards travel of the tractor and the direction of the arrow R represents a flow direction of the fluid during reverse travel of the tractor.

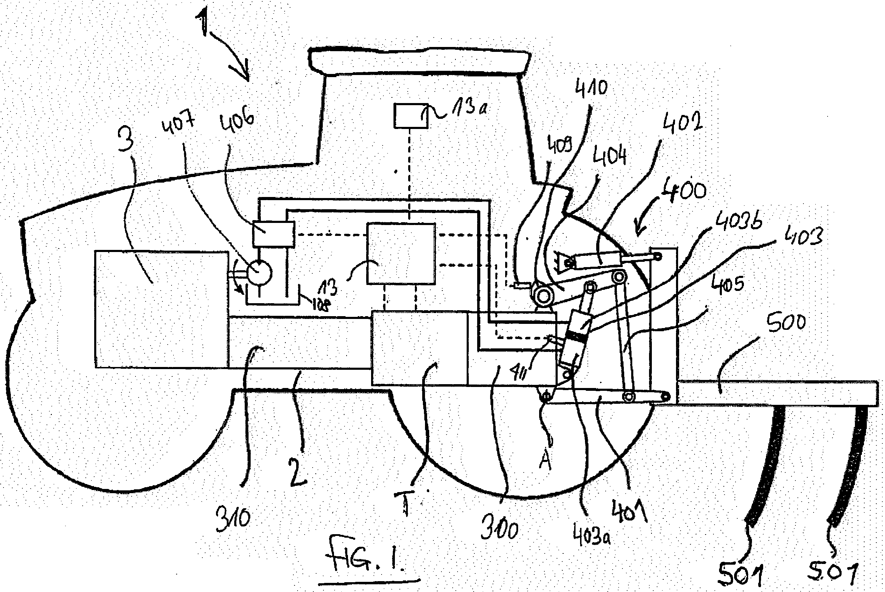

By means of a first measuring unit 110, the pressure value pUHC prevailing in the upper circuit UHC can be measured. This pressure value pUHC is then sent to the control unit 13 represented in Figure 1. Moreover, both the pressure in the upper circuit UHC as well as the pressure in the lower circuit LHC is conducted by means of a shuttle valve 120 to a second measuring unit 100 in order to measure the pressure value pHCmax. This pressure value pHCmax is also sent to the control unit 13.

Thereby the shuttle valve in the transmission T is designed in such a way so as to communicate to the second measuring unit 100 the greater of the two pressures present in the upper circuit UHC or of the lower circuit LHC as a pressure value pHCmax. When the utility vehicle is stationary, the second measuring unit 100 issues a system pressure arising in the upper circuit UHC or the lower circuit LHC as pressure value pHCmax. A rotation sensor, not visible in Figure 2, is arranged at the hydraulic motor 210, with which the direction of the rotation of the hydraulic motor 210 is determined and the direction of travel of the vehicle can be concluded.

Preferably, when the vehicle is stationary a system pressure of about 15 bar is set in the fluid circuit HC. This system pressure of 15 bar results from the fact that, by means of a supply line 130, the fluid circuit HC is supplied with a constant system pressure by means of a constant hydraulic pump, not shown, driven by the combustion engine. Two check valves 140 prevent oil from flowing back into the supply line. As soon as the utility vehicle moves or the transmission is no longer stationary, the pressure inside the fluid circuit rises, depending on the drive torque, to a high-pressure value of over 15 bar. With an average loading of the transmission, a high-pressure value of 250-350 bar is provided. A limit value of 500 bar must not be exceeded in order to avoid overstressing of the transmission and its components.

Pressure pHCmax, transmission ratio iT or alternatively the pivot angle of the hydraulic motor 210 or alternatively the intake volume V of the hydraulic motor 210 represent parameters which determine the output torque Mhydr of the hydraulic branch 7. As the transmission ratio iT is known, the other parameters pivot angle and intake volume of the hydraulic motor 210 are can be determined by look-up tables or characteristic maps.

As described in relation to Figure 1, the torque supplied by combustion engine 3 is distributed to a mechanic branch 6 and a hydrostatic branch 7 of the hydrostatic mechanical split type transmission T in which the fraction of torque transmitted by both branches depends on the transmission ratio iT. So if the fraction of the hydrostatic branch 7 is determined as described above, the fraction Mmech transmitted by the mechanic branch 6 can also be determined depending on the current transmission ratio iT.

The overall output torque MOT of the transmission can then be calculated from

$$(1) \qquad MOT = Mhydr + Mmech = \frac{pHCmax * V}{2\pi} + Mmech$$

The pressure pHCmax is measured as described above and the intake volume V of the hydraulic motor 210 is determined by characteristic maps depending on the transmission ratio iT.

The output torque MOT of the transmission is supplied to the wheels resulting in a wheel torque MW:

$$(2) \qquad MW = MOT * iTW$$

In this equation iTW represents the overall gear ratio between transmission and wheel being the product of the gear ratio of the rear axle differential 12a and the final reduction gears 12e in rear wheel mode, e.g.:

$$iTW = 9{,}2 \text{ (for the rear axle differential 12a)} \times 3{,}58 \text{ (for the final reduction gears 12e)} = 32{,}97 \text{ overall.}$$

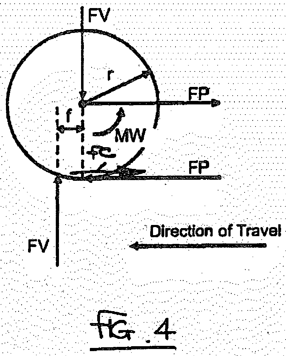

Having the wheel torque MW, the pull force FP can be calculated by using the known relationship of the forces on a wheel as shown in the diagram in Fig 4.

$$(3) \qquad MW = FP * r + FV * f = FC * r$$

In which:

- r represents the effective wheel radius depending on tyre pressure and wheel size provided by the wheel manufacturer in respective tables
- f represents the offset of the point of application of the wheel vertical force (see Fig 4) caused by Roll resistance and sinking of the wheels

The circumferential force FC is a theoretical value achieved by converting equation (3):

$$(4) \qquad FC = \frac{MW}{r} = FP + FV * \frac{f}{r}$$

As the hitch control only needs an indication of an increase in pull force FP, FV (which remains constant) can be ignored so the equation can be simplified to:

$$(4) \qquad \frac{MW}{r} = FP$$

Thus an increase of the pull force $\Delta FP$ would result in an increase of the torque demand $\Delta MW$ and thereby an increase of pHCmax.

As pHCmax is constantly measured in the system this parameter can be used to control the hitch based on an increased draft force applied by the implement.

So by monitoring pHCmax which is already done for transmission control and protection purposes, an increase of the draft or pull force can be detected and processed in the electronic hitch control system to provide functions like draft control and intermix position/draft control.

As the difference of the pull force FP cannot be used as a control parameter for damping the implement hitch when the hitch is in the transport position, the pressure sensor 411 may be provided to measure fluid pressure in the chamber 403a of the hydraulic actuating cylinders 403. A variation of the measured pressure signal from sensor 411 indicates that the implement is oscillating and the weight applied to the front axle will therefore also be oscillating. So the signal from pressure sensor 411 is forwarded to the control unit 13 to adjust damping characteristics of the implement lift circuit. The damping characteristics can then be adjusted by the hitch control system by adjusting control valve 406 to reduce oscillation by allowing the implement to move relative to the tractor and thus increase driving stability.

According to the invention, alternatively the damping may be adjusted by means of wheel load sensors which indicate the variation in wheel loading which is symptomatic of tractor oscillation. These wheel load sensor may be pressure sensors measuring pressure variations in the suspension cylinder of the front axle or strain gauges in the rigid rear axle housing.

As described on page 1, there are different modes of hitch operation: In Position control mode, Draft Control mode and Position/Draft intermix mode the height of the hitch is continuously supported by the tractor. But the hitch can also be set to a "float position" mode in which implements, such as seed drills, which have a ground contacting wheel(s) can follow the ground contours with part of the weight of the implement supported by the wheel(s) as the implement is drawn along behind the tractor.

Although the foregoing examples have concentrated on hitch control systems, as indicated previously the invention is not so limited, being applicable to any tractor control systems for the controlled operation of an implement where a draft force measurement is required.

**Claims**

1. A control system for tractor 1 which includes a transmission T with a hydraulic drive circuit HC in which a hydraulic pump 200 supplies pressurised fluid to a hydraulic motor 210, the control system controlling an operating condition of an implement 500 and including pressure sensing means 100, 110 to sense the pressure in the hydraulic drive circuit HC which is indicative of the current pull force necessary to pull the implement 500, the system also including a control means 13 which receives the pressure signal and inputs from the tractor operator indicative of the required operating condition of the implement 500 and adjusts an implement position in response to the variations in the pressure signal in order to try to maintain the required operating condition of the implement 500, wherein the control system controls the position of an implement attachment hitch 400 relative to the tractor 1 via hitch actuator means 403 which raises and lowers the implement hitch 400 relative to the tractor 1, the system adjusting the vertical position of the hitch 400 relative to the tractor 1 in order to try to maintain the required operating condition and wherein a hitch position sensing means 409 is provided which supplies the control means 13 with a signal indicative of the current position of the hitch 400 relative to the tractor 1, **characterised in that** the hitch actuator means 403 comprises fluid pressure actuator means 403a which pivots the hitch 400 relative to the tractor 1 and further sensing means are provided which supply the control means 13 with a signal indicative of the oscillation of the tractor I and implement 500, the control means 13 varying the pressure in the hitch actuator means 403 to allow the implement to move relative to the tractor when the tractor is driven with the implement 500 in a transport position over rough ground to damp the tendency of the tractor 1 and implement 500 to oscillate together and wherein said further sensing means comprises wheel load sensing means indicating a variation in wheel loading, or second pressure sensing means 411 indicating a variation in pressure in the fluid pressure actuator means 403a.

2. A system according to claim 1 wherein the operating condition of an implement 500 is a working depth.

3. A system according to claim 1 or claim 2 in which the hitch 400 is attached to the rear and/or front of the tractor 1.

4. A system according to any of claims 1 to 3 in which the inputs into the control means 13 by the operator are indicative of draft force control criteria.

5. A system according to any preceding claim in which the inputs into the control means 13 by the operator are indicative of intermix control criteria.

**Patentansprüche**

1. Steuer- oder Regelsystem für einen Traktor 1 mit einem Getriebe T mit einem hydraulischen Antriebskreis HC, in dem eine hydraulische Pumpe 200 einen hydraulischen Motor 210 mit einem unter Druck stehenden Fluid versorgt, wobei das Steuer- oder Regelsystem eine Betriebsbedingung eines Arbeitsgeräts 500 steuert oder regelt und Druckmessmittel 100, 110 aufweist, um den Druck in dem hydraulischen Antriebskreis HC zu messen, der ein Indikator für die gegenwärtige, um das Arbeitsgerät 500 zu ziehen notwendige Zugkraft ist, wobei das System außerdem ein Steuer- oder Regelmittel 13 aufweist, das das Drucksignal und Eingaben von der Bedienperson des Traktors empfängt, die ein Indikator für die verlangte Betriebsbedingung des Arbeitsgeräts 500 sind, und eine Stellung des Arbeitsgeräts in Reaktion auf die Variationen in dem Drucksignal anpasst, um zu versuchen, die verlangte Betriebsbedingung des Arbeitsgeräts 500 beizubehalten, wobei das Steuer- oder Regelsystem die Stellung einer Arbeitsgerät-Anhängerkupplung 400 in Bezug auf den Traktor 1 durch ein Kupplungs-Aktuatormittel 403 steuert oder regelt, das die Arbeitsgerätkupplung 400 in Bezug auf den Traktor 1 anhebt und absenkt, wobei das System die vertikale Stellung der Kupplung 400 in Bezug auf den Traktor 1 anpasst, um zu versuchen, die verlangte Betriebsbedingung beizubehalten und wobei ein Kupplungsstellungs-Messmittel 409 vorhanden ist, welches das Steuer- oder Regelmittel 13 mit einem Signal versorgt, das ein Indikator für die gegenwärtige Stellung der Kupplung 400 in Bezug auf den Traktor 1 ist, **dadurch gekennzeichnet, dass** das Kupplungs-Aktuatormittel 403 ein Fluiddruck-Aktuatormittel 403a aufweist, das die Kupplung 400 relativ zu dem Traktor 1 verschwenkt und ein weiteres Messmittel vorgesehen ist, welches das Steuer- oder Regelmittel 13 mit einem Signal versorgt, das ein Indikator für die Schwingung des Traktors 1 und des Arbeitsgeräts 500 ist, wobei das Steuer- oder Regelmittel 13 den Druck in dem Kupplungs-Aktuatormittel 403 variiert, um es dem Arbeitsgerät zu erlauben, sich relativ zum Traktor zu bewegen, wenn der Traktor mit dem Arbeitsgerät 500 in einer Transportstellung über unebenen Boden gefahren wird, um die Neigung des Traktors 1 und des Arbeitsgeräts 500 zum gemeinsamen Schwingen zu dämpfen, und wobei das weitere Messmittel ein eine Änderung der Radlast anzeigendes Radlastdetektionsmittel oder ein zweites Druckmessmittel 411 aufweist, das eine Druckänderung in dem Fluiddruck-Aktuatormittel 403a anzeigt.

2. System nach Anspruch 1, wobei die Betriebsbedingung eines Arbeitsgeräts 500 eine Arbeitstiefe ist.

3. System nach Anspruch 1 oder 2, wobei die Kupplung 400 am Heck und/oder der Front des Traktors 1 befestigt ist.

4. System nach einem der Ansprüche 1 bis 3, in welchem die Eingaben in das Steuer- oder Regelmittel 13 durch die Bedienperson ein Indikator für Zugkraftsteuerungskriterien oder Zugkraftregelungskriterien sind.

5. System nach einem der vorhergehenden Ansprüche, in welchem die Eingaben in das Steuer- oder Regelmittel 13 durch die Bedienperson Indikatoren für Mischungssteuerungskriterien oder Mischungsregelungskriterien sind.

**Revendications**

1. Dispositif de commande pour un tracteur (1) qui comporte une transmission (T) avec un circuit d'entraînement hydraulique (HC) dans lequel une pompe hydraulique (200) délivre un fluide pressurisé à un moteur hydraulique (210), le dispositif de commande commandant une condition de fonctionnement d'un outillage (500) et comportant un moyen de détection de pression (100, 110) afin de détecter la pression dans le circuit d'entraînement hydraulique (HC) qui est représentative de l'effort d'entraînement courant nécessaire afin d'entraîner l'outillage (500), le dispositif comportant aussi un moyen de commande (13) qui reçoit de l'opérateur de tracteur les entrées de données et le signal de pression représentatifs d'une condition de fonctionnement requise de l'outillage (500), et règle une position d'outillage en réponse à des variations sur le signal de pression dans le but d'essayer de maintenir la condition de fonctionnement requise de l'outillage (500), dans lequel le dispositif de commande commande la position d'un attelage de fixation d'outillage (400) par rapport au tracteur (1) par l'intermédiaire d'un moyen d'activation d'attelage (403) qui fait monter et descendre l'attelage d'outillage (400) par rapport au tracteur (1), le dispositif ajustant la position verticale de l'attelage (400) par rapport au tracteur (1) dans le but d'essayer de maintenir la condition de fonctionnement requise et dans lequel il est agencé un moyen de détection de position d'attelage (409) qui délivre au moyen de commande (13) un signal représentatif de la position courante de l'attelage (400) par rapport au tracteur (1), **caractérisé en ce que** le moyen d'activation d'attelage (403) comprend un moyen d'activation de pression de fluide (403a) qui fait pivoter l'attelage (400) par rapport au tracteur (1) et comporte des moyens de détection supplémentaires qui délivrent au moyen de commande (13) un signal représentatif de l'oscillation du tracteur (1) et de l'outillage (500), le moyen de commande (13) modifiant la pression dans le moyen d'activation d'attelage (403) afin de permettre à l'outillage de se déplacer par rapport au tracteur lorsque le tracteur est entraîné avec l'outillage (500) dans une position de transport au-dessus d'un sol brut afin d'amortir la tendance du tracteur (1) et de l'outillage (500) à osciller ensemble et dans lequel, ledit autre moyen de détection comprend un moyen de détection de charge de roue indiquant une variation sur la charge de roue, ou un second moyen de détection de pression (411) indiquant une variation sur la pression dans le moyen d'activation de pression de fluide (403a).

2. Dispositif selon la revendication 1 dans lequel la condition de fonctionnement d'un outillage (500) est une profondeur de travail.

3. Dispositif selon la revendication 1 ou 2 dans lequel l'attelage (400) est fixé à l'arrière et/ou à l'avant du tracteur (1).

4. Dispositif selon l'une quelconque des revendications 1 à 3 dans lequel les données entrées dans le moyen de commande (13) par l'opérateur sont représentatives de critères de commande d'effort de traction.

5. Dispositif selon l'une quelconque des revendications précédentes dans lequel les données entrées dans le moyen de commande (13) par l'opérateur sont représentatives de critères de commande mixtes.

FIG. 1.

Fig 2

Fig 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6321851 B
- US 2003217852 A
- US 5997024 A
- US 4023622 A